# EUROPÄISCHE PATENTANMELDUNG

(11) **EP 1 787 833 A1**
(43) Veröffentlichungstag der Anmeldung: **23.05.2007**
(21) Anmeldenummer: 06121020.9
(22) Anmeldetag: 21.09.2006
(51) Int. Cl.: B60G 7/00, B60G 9/00

(54) **Vierpunktlenker zur Anbindung einer Starrachse an den Rahmen eines Fahrzeuges, insbesondere eines Nutzfahrzeuges**

(30) Priorität: 22.11.2005 DE 102005055586
(71) Anmelder: Frauenthal Deutschland GmbH, 59229 Ahlen (DE)
(72) Erfinder: Dresig, Horst, Dr.-Ing., 82152 Planegg (DE)
(74) Vertreter: Flötotto, Hubert

(57) **Zusammenfassung**

Vierpunktlenker zur Anbindung einer Starrachse an dem Rahmen eines Fahrzeuges, insbesondere eines Nutzfahrzeuges, wobei der Vierpunktlenker vier Lageraugen für die Anlenkung aufweist, von denen zwei Anlenkstellen mit der Starrachse und zwei mit dem Rahmen verbunden sind und die Wirkung des Vierpunktlenkers alleine betrachtet eine Querführungsfunktion und gegen Wankbewegungen eine Stabilisierungsfunktion und in Wirkverbindung mit Längslenkern betrachtet eine Längsführungsfunktion der Achse hat.
dadurch gekennzeichnet, dass der Vierpunktlenker (100) aus einer Schweißbaugruppe (10, 20, 30, 40, 50, 60, 70, 80) besteht derart, dass die Lageraugen (11 21, 31, 41, 51, 61, 71, 81) paarweise miteinander durch runde, ovale, quadratische oder rechteckige Rohre oder Bleche (11, 21, 31, 41, 51, 61, 71, 81) verbunden sind und diese genannten Bauteile wiederum durch geeignete Rohre oder Bleche (12, 22, 32, 42, 52, 62, 72, 82) miteinander verbunden sind, die bevorzugt gegenseitig hindurchgesteckt und bevorzugt beidseitig miteinander verschweißt sind.

## Beschreibung

Die Erfindung betrifft einen Vierpunktlenker zur Anbindung einer Starrachse an dem Rahmen eines Fahrzeuges, insbesondere eines Nutzfahrzeuges nach dem Oberbegriff des Anspruches 1.

Ein Vierpunktlenker dieser Art ist aus der EP 0 776 275 B1 bekannt.

Eine in der o. g. Patentschrift nicht berücksichtigte wesentlich leichtere Variante ist in der Offenlegungsschrift DE 102 06 809 A1 dargestellt.

Das Bauteil ist eine Schweißbaugruppe, die aus vier Lageraugen besteht, die paarweise untereinander durch Rohre verbunden sind (im Sonderfall können es auch Bleche sein), die wiederum in dem Falle, dass sie sich nicht kreuzen, durch ein, zwei oder mehrere Rohre miteinander verbunden sind. Die Rohre können kreisförmig, elliptisch, quadratisch oder rechteckig sein. In dem Falle, dass sich die Rohre kreuzen, also eine Diagonalverbindung der Lager bilden, ist es i. a. notwendig, im Kreuzungsbereich aus Steifigkeits- und/oder Festigkeitsgründen versteifende Bleche vorzusehen, die als Knotenbleche betrachtet werden können.

Die Formgebung hat beispielsweise den Sinn, dass definierte Kraft-und Verformungsgrößen unter Beachtung der notwendigen Festigkeit durch die Varlationsmöglichkeiten der Rohrabmessungen leicht zu realisieren sind.

Darüber hinaus ist es vorteilhaft, dass relativ wenige Schweißnähte erforderlich sind, insbesondere im Vergleich zu der in Offenlegungsschrift DE 102 06 809 A1 beschriebenen Ausführung. Die geringen Schweißnahtlängen sind nicht nur wesentlich kostengünstiger und weniger zeitaufwendig in der Fertigung, sondern bewirken auch einen geringeren Schweißverzug.

Zur weiteren Gewichtseinsparung können die Lageraugen exzentrisch ausgebildet sein, wobei dann die dickere Seite der Lageraugen Schweißseite ist.

Das Material der Schweißbaugruppe und der Lageraugen ist ein legiertes Stahlhalbzeug, das schweißfähig ist.

In den Figuren sind Ausführungsbeispiele der Erfindung dargestellt. Die vertikale Symmetrieebene ist die Fahrzeugmitte. Auch horizontal sind die Ausführungen symmetrisch.

Es zeigen:
- Fig. 1: einen Vierpunktlenker mit diagonaler Lagerverbindung durch Rechteckrohre und Knotenblechverstärkung (10);
- Fig. 2: einen Vierpunktlenker mit diagonaler Lagerverbindung durch Rechteckrohre und Blechverstärkung oben/unten durch mehrere Bleche (20):
- Fig. 3: einen Vierpunktlenker mit diagonaler Lagerverbindung durch Rechteckrohre und Blechverstärkung oben/unten (30):
- Fig. 4: einen Vierpunktlenker aus Rechteckrohren (40):
- Fig. 5: einen Vierpunktlenker aus Rechteck- und Rundrohren (50);
- Fig. 6: einen Vierpunktlenker aus Blechen und Rundrohren (60);
- Fig. 7: einen weiteren Vierpunktlenker aus Rechteckrohren (70):
- Fig. 8: einen Vierpunktlenker in einer weiteren Ausführung (80);
- Fig. 9: den Einbau des Vierpunktlenkers im Fahrzeug.

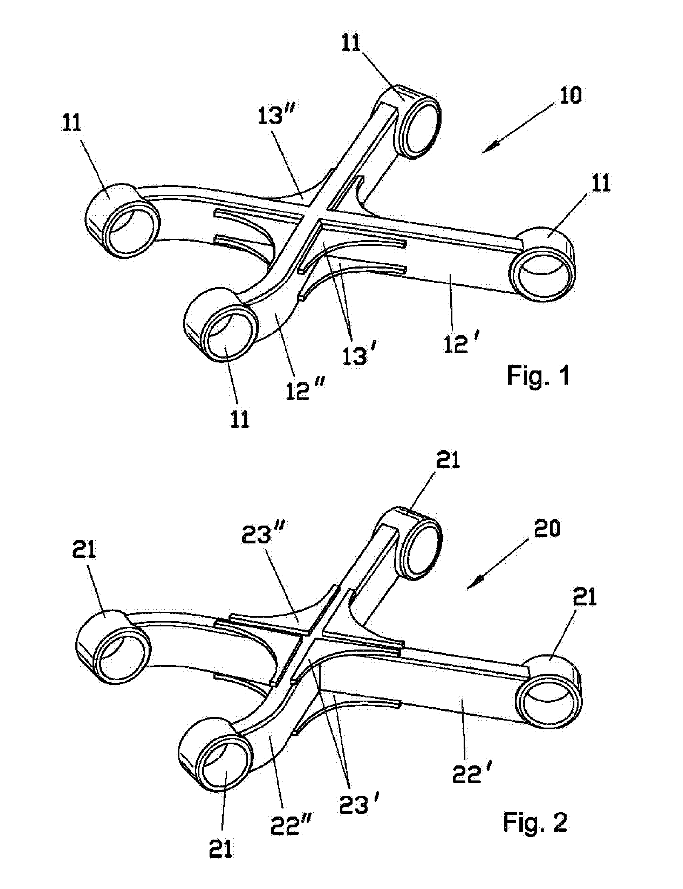

Die Fig. 1 zeigt den Vierpunktlenker 10 in diagonaler Rechteckrohrausführung mit Knotenblechen. Die Lageraugen 11 sind angeschweißt, ebenso die Knotenbleche 13. Das im Bild nahezu horizontale Diagonalrohr 12' ist hier durchgehend dargestellt, die andere Diagonale 12'' besteht aus zwei Teilen

Beispielsweise kann die Torsionssteifigkeit des Vierpunktlenkers durch Veränderung der Rohrabmessungen und durch Wahl ihrer Blechstärken leicht variiert werden, wobei natürlich die Zulässigkeit der Spannungen beachtet werden muss. Hierzu sind die Knotenbleche 13 erforderlich. Die Kontur dieser Blechversteifungen wird nach Steifigkeits- und Festigkeitskriterien bestimmt. Beides gilt auch für beide folgenden Figuren.

Die Fig. 2 zeigt den Vierpunktlenker 20 in einer Ausführung, bei der im Unterschied zu der in Fig. 1 gezeigten Ausführung die Knotenbleche 23 auf bzw. unter den Rohren angeschweißt sind. Durch die Abstände zwischen den Verstärkungsblechen sind diese rundum anschweißbar. Ob alle Schweißnähte (die nicht dargestellt sind) erforderlich sind, kann je nach Spannungsbild entschieden werden.

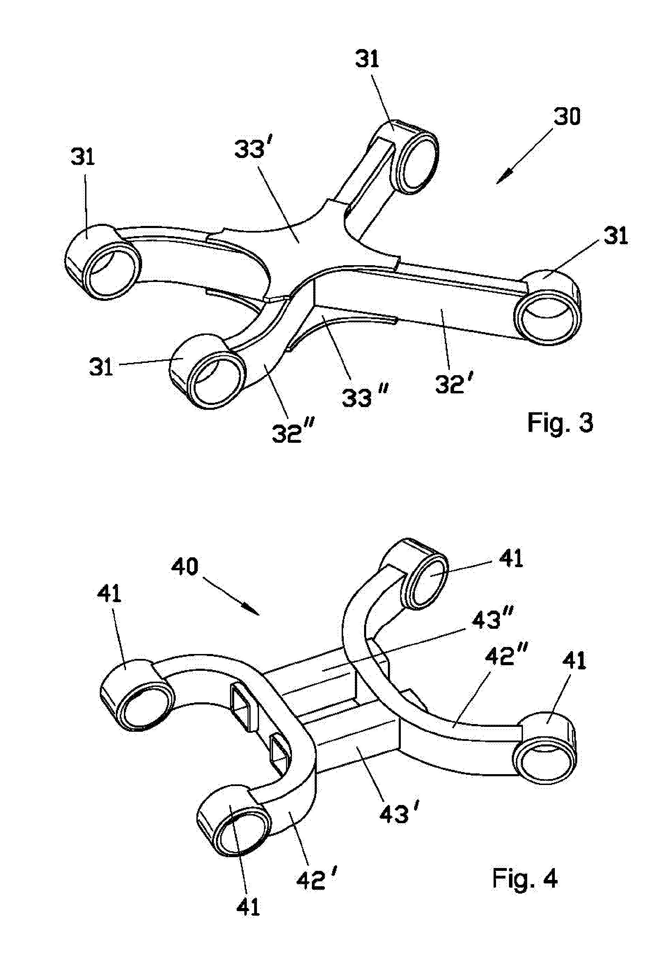

Die Fig. 3 zeigt den Vierpunktlenker 30 in einer Ausführung, bei der im Unterschied zu der in Fig. 2 gezeigten Ausführung die Blechversteifung 33 oben/unten aus einem Teil besteht. Neben besseren optischen Eindruck ist hier eine günstigere Spannungsreduzierung möglich.

Die Fig. 4 zeigt den Vierpunktlenker 40 in einer Ausführung, bei der die jeweils achs- bzw. rahmenseitigen Lageraugen mit Rechteckrohren verbunden sind, durch die hier weiter zwei Rechteckrohre hindurch gesteckt und beidseitig umlaufend verschweißt (nicht dargestellt) sind. Die Verwendung von (mindestens) zwei Rohren ist zur geeigneten Übertragung der Seitenkraft i. a. erforderlich.

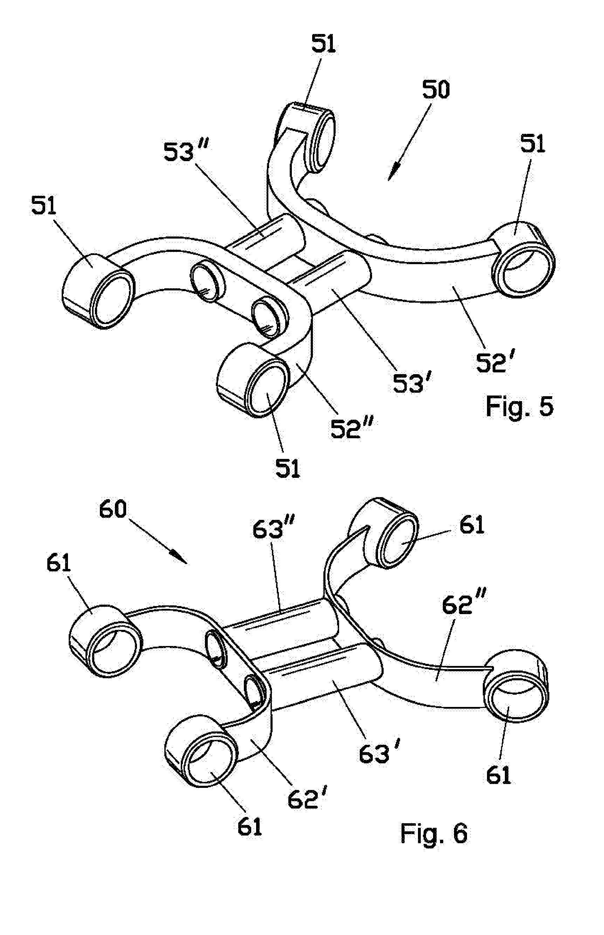

Die Fig. 5 zeigt den Vierpunktlenker 50 in einer Ausführung, bei der im Unterschied zu der in Fig. 4 gezeigten Ausführung die in Fahrtrichtung angeordneten Rohre Rundrohre sind.

Die Fig. 6 zeigt den Vierpunktlenker 60 in einer Ausführung, bei der im Unterschied zu der in Fig. 5 gezeigten Ausführung die Verbindungen der achs- bzw. rahmenseitigen Lageraugen durch Bleche realisiert wird. Bei einer realistischen Ausführung werden diese Bleche eine veränderliche Höhe aufweisen und insbesondere an den Lageraugen 61 und dem Anschluss der Rohre 63 eine größere Höhe besitzen. Die Verbindungsrohre 63 können selbstverständlich auch rechteckig oder oval sein.

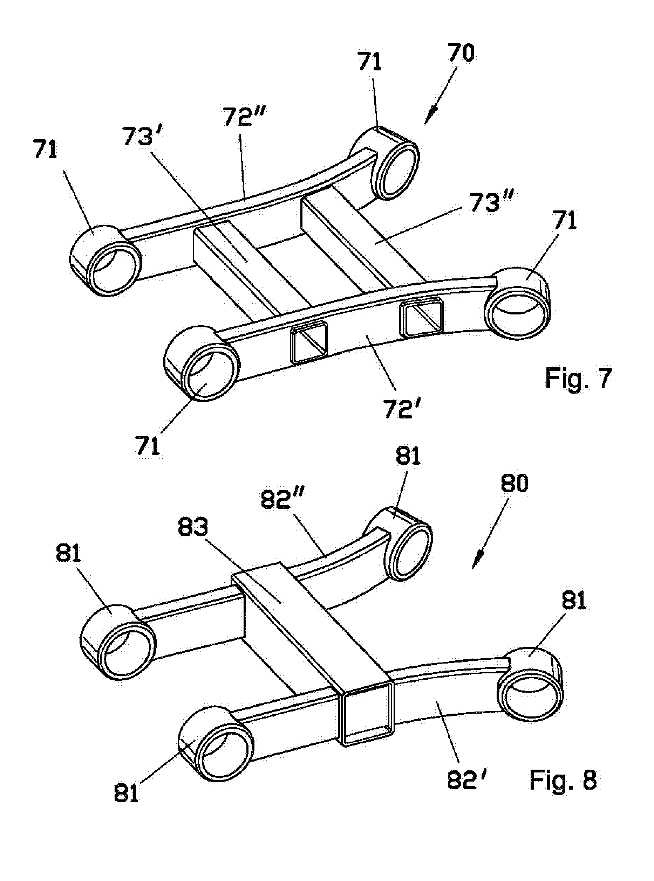

Die Fig. 7 zeigt den Vierpunktlenker 70 in einer Ausführung, bei der jeweils ein achsseitiges Lagerauge mit einem rahmenseitigen Lagerauge durch Rechteckrohre 72 verbunden ist, durch die weitere Rechteckrohre 73 hindurch gesteckt und verschweißt sind.

Die Fig. 8 zeigt den Vierpunktlenker 80 in einer Ausführung, bei der im Unterschied zu Fig. 7 die Rechteckrohre, die die Lager verbinden, durch ein Querrohr hindurch gesteckt sind. Bei Verwendung von nur einem Querrohr ist dieses wesentlich größer zu dimensionieren als bei Verwendung von zwei (oder mehreren) Querrohren, um die Beanspruchungen aufnehmen zu können. Das gilt natürlich ebenso für die Ausführung mit Längsrohren in Figuren 4 bis 6.

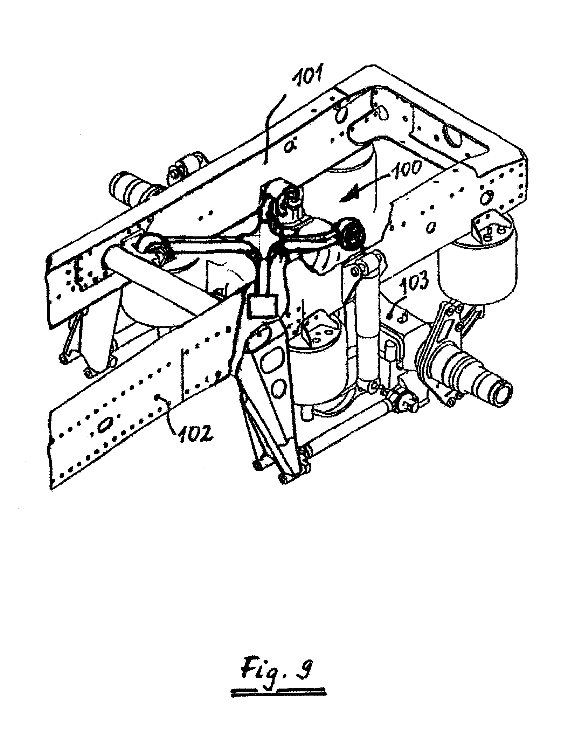

Die Fig. 9 zeigt den Einbau des Vierpunktlenkers 100 in einen LKW. Der Vierpunktlenker 100 ist mit zwei Armen mit dem Rahmen 101, 102 und mit zwei Armen mit der Achse 103 verbunden. Der Vierpunktlenker 100 ersetzt Längs- und Querlenker ("Dreieckslenker") an dieser Stelle sowie einen Stabilisator an dieser Achse.

## Patentansprüche

1. Vierpunktlenker zur Anbindung einer Starrachse an den Rahmen eines Fahrzeuges, insbesondere eines Nutzfahrzeuges, wobei der Vierpunktlenker vier Lageraugen für die Anlenkung aufweist, von denen zwei Anlenkstellen mit der Starrachse und zwei mit dem Rahmen verbunden sind und die Wirkung des Vierpunktlenkers alleine betrachtet eine Querführungsfunktion und gegen Wankbewegungen eine Stabilisierungsfunktion und in Wirkverbindung mit Längslenkern betrachtet eine Längsführungsfunktion der Achse hat, **dadurch gekennzeichnet, dass** der Vierpunktlenker (100) aus einer Schweißbaugruppe (10, 20, 30, 40, 50, 60, 70, 80) besteht derart, dass die Lageraugen (11, 21, 31, 41, 51, 61, 71, 81) paarweise miteinander durch runde, ovale, quadratische oder rechteckige Rohre oder Bleche (11, 21, 31, 41, 51, 61, 71, 81) verbunden sind und diese genannten Bauteile wiederum durch geeignete Rohre oder Bleche (12, 22, 32, 42, 52, 62, 72, 82) miteinander verbunden sind, die bevorzugt gegenseitig hindurch gesteckt und bevorzugt beidseitig miteinander verschweißt sind.

2. Vierpunktlenker nach Anspruch 1, **dadurch gekennzeichnet, dass** die Lageraugen (11, 21, 31) der Schweißbaugruppe (10, 20, 30) paarweise vom Lager achsseitig diagonal zum Lager rahmenseitig durch runde, ovale, quadratische oder rechteckige Rohre (12, 22, 32) miteinander verbunden sind, wobei die genannten Rohre bevorzugt in der Fahrzeugmitte aufeinander treffen und bevorzugt ein Diagonalrohr durchgehend ist und im Bereich des Zusammentreffens aus Steifigkeits- und/oder Festigkeitsgründen Knotenbleche (13, 23, 33) neben oder auf bzw. unter den Rohren angeschweißt sein können.

3. Vierpunktlenker nach Anspruch 1, **dadurch gekennzeichnet, dass** die Lageraugen (41, 51, 61) der Schweißbaugruppe (40, 50, 60) paarweise achsseitig bzw. rahmenseitig durch runde, ovale, quadratische oder rechteckige Rohre oder Bleche (42, 52, 62) miteinander verbunden sind und diese Lagerverbindungen durch ein, zwei oder mehrere runde, ovale, quadratische oder rechteckige bevorzugt gerade Rohre (43, 53, 63), die bevorzugt gegenseitig hindurch gesteckt sind, bevorzugt beidseitig miteinander verschweißt sind.

4. Vierpunktlenker nach Anspruch 1, **dadurch gekennzeichnet, dass** die Lageraugen (71, 81) der Schweißbaugruppe (70, 80) paarweise vom Lager achsseitig zum Lager rahmenseitig durch runde, ovale, quadratische oder rechteckige Rohre oder Bleche (72, 82) miteinander verbunden sind und diese Lagerverbindungen durch ein, zwei oder mehrere runde, ovale, quadratische oder rechteckige bevorzugt gerade Rohre (73, 83), die bevorzugt gegenseitig hindurch gesteckt und bevorzugt beidseitig miteinander verschweißt sind.

5. Vierpunktlenker nach vorangegangenen Ansprüchen, **dadurch gekennzeichnet, dass** die Lageraugen (11, 21, 31, 41, 51, 61, 71, 81) zentrisch oder exzentrisch sein können und bei der exzentrischen Ausführung die dickere Seite Schweißseite ist.

6. Vierpunktlenker nach vorangegangenen Ansprüchen, **dadurch gekennzeichnet, dass** die Schweißbaugruppe (10, 20, 30, 40, 50, 60, 70, 80) mit den Lageraugen (11, 21, 31, 41, 51, 61, 71, 81) aus einem legierten Stahlhalbzeug, das schweißfähig ist, besteht.

7. Vierpunktlenker nach Ansprüchen 1 bis 5, **dadurch gekennzeichnet, dass** die Lageraugen (11, 21, 31, 41, 51, 61, 71, 81) als schweißbare Schmiedeteile so mit einem Ansatz gefertigt sind, dass die Rohr-/Blechkonstruktion daran angeschweißt werden kann.
